# DEMANDE DE BREVET EUROPEEN

(11) **EP 1 314 611 A2**
(43) Date de publication de la demande: **28.05.2003**
(21) Numéro de dépôt: 02364039.4
(22) Date de dépôt: 05.11.2002
(51) Int. Cl.: B60R 11/00

(54) **Dispositif de fixation étanche d'une pièce sur la carrosserie d'un véhicule automobile**

(30) Priorité: 16.11.2001 FR 0114895
(71) Demandeur: WAGON AUTOMOTIVE SNC, 79302 Bressuire Cédex (FR)
(72) Inventeur: Moreau Stéphane, 49300 Le Puy Saint-Bonnet (FR)
(74) Mandataire: Vidon, Patrice

(57) **Abrégé**

L'invention concerne un dispositif de fixation étanche, par vissage, d'une pièce dans une gouge ménagée sur la carrosserie d'un véhicule automobile, comprenant une plaque métallique fine et une épaisseur de mousse, susceptibles de suivre une courbure du fond de ladite gouge, de façon à assurer une bonne étanchéité lorsque ladite pièce est vissée dans ladite gouge.

## Description

Le domaine de l'invention est celui de la fixation de pièces sur la carrosserie d'un véhicule automobile, et notamment dans une gouge ménagée dans cette carrosserie. Ces pièces peuvent notamment être des longerons, destinés par exemple à coopérer avec des barres de galerie, ou des dispositifs similaires, sur des véhicules automobiles.

Plus précisément, l'invention concerne la solidarisation de pièces, telles que des longerons, à la carrosserie d'un véhicules, et en particulier à son pavillon. Plus précisément encore, l'invention concerne notamment l'étanchéité de cette solidarisation.

On présente par la suite plus précisément le cas de la fixation de galeries, ou de barres de galerie, sur un véhicule, sans que cela ne soit, bien sûr, limitatif de l'invention. On appelle ici longeron l'ensemble formé par la pièce "longeron" elle-même, dite également "corps de longeron", et les moyens de fixation correspondants.

On connaît de nombreux systèmes de fixation de galerie. Actuellement, sur la plupart des véhicules modernes, on prévoit des longerons, s'étendant de chaque côté du véhicule. Ces longerons sont intégrés au pavillon du véhicule, et sont souvent dissimulés par un cache lorsqu'ils ne sont pas utilisés, de façon à ne nuire ni à l'esthétique, ni à l'aérodynamique du véhicule. Les barres de galerie peuvent être solidarisées aux longerons en des points prédéfinis, et/ou coulisser dans ces longerons.

La fixation d'un longeron au pavillon (ou, le cas échéant, à un autre élément de carrosserie) se fait généralement par vissage. Le pavillon présente donc une gouge qui est percée aux emplacements de vissage. On met ensuite en place le longeron dans la gouge, et on le visse.

Un problème majeur de cette technique est, actuellement, celui de l'étanchéité. Le fait que le pavillon soit percé entraîne la possibilité que l'eau pénètre à l'intérieur du véhicule, avec tous les inconvénients évidents que cela provoque (corrosion, humidité, odeurs, tâches,...).

Pour tenter de pallier ce problème, on place généralement une plaque métallique ayant une épaisseur de l'ordre de 2 à 3mm par exemple, intégrant un joint d'étanchéité. Lorsque l'on applique un serrage suffisant, le contact métallique rigide (pavillon/plaque) permet d'éviter le fluage et donc d'offrir une bonne étanchéité, au moins en principe. L'homme du métier cherche donc à obtenir, dans tous les cas, un tel contact.

Cependant, dans la pratique, cette approche ne peut généralement pas être mise en oeuvre de façon efficace. La forme de la gouge du pavillon dans laquelle vient prendre place le longeron n'est en général pas plane sur une grande largeur. Les rayons du fond de gouge sont relativement proches l'un de l'autre. La plaque métallique est quant à elle, plane et rigide, et ne peut donc pas suivre ces rayons (elle ne peut pas non plus être préformée, pour des raisons évidentes de tolérances).

On est donc conduit à réduire la surface de cette plaque métallique, de façon qu'elle coïncide avec une surface plane du fond de gouge. L'efficacité de cette solution est alors faible : les surfaces en contact pour assurer l'étanchéité sont très limitées. Cela est d'autant plus ennuyeux que les tolérances doivent être importantes : les trous réalisés dans le pavillon sont d'un diamètre important, et un oblong est nécessaire pour permettre le positionnement de chaque vis sur le longeron.

Au final, on constate que, quelle que soit la mise en oeuvre particulière retenue, l'étanchéité n'est pas assurée de façon suffisante.

Une autre difficulté habituellement rencontrée est celui du montage de tels longerons. Les constructeurs automobiles désirent en effet que ce montage soit le plus facile possible (facilité de réglage, pour que les vis tombent en face des trous du pavillon, vis embarquées sur le longeron,...) et sans risque (par exemple, pas de vis dépassant du longeron, et qui pourraient rayer la peinture,...).

On conçoit que les mêmes problèmes se posent, de façon identique ou similaire, pour d'autres types de pièces qu'il faut rapporter sur la carrosserie.

L'invention a notamment pour objectif de pallier ces différents inconvénients de l'état de l'art, et de répondre aux attentes des constructeurs automobiles.

Plus précisément, un objectif de l'invention est de fournir un dispositif de fixation d'une pièce, par exemple un longeron, qui offre une meilleure étanchéité que les systèmes connus.

Un autre objectif de l'invention est de fournir un tel dispositif de fixation, qui soit simple à monter sur un véhicule, sans opération ni outillage particulier.

Encore un autre objectif de l'invention est de fournir un tel dispositif de fixation, qui soit réglable, pour tenir compte des dispersions du véhicule.

L'invention a également pour objectif de fournir un tel dispositif de fixation, qui limite les problèmes de couple de serrage. Il est en effet souhaitable qu'il n'y ait pas de couple élevé au serrage, et pas de desserrage pendant la vie du véhicule.

Un autre objectif de l'invention est de fournir un tel dispositif de fixation, dont le coût de revient soit inférieur à ou du même ordre que, celui des dispositifs de types connus.

Encore un autre objectif de l'invention est de fournir un tel dispositif de fixation, qui puisse être fourni aux constructeurs comme un tout, et sans élément, risquant de rayer la carrosserie. Un objectif est également d'éviter la perte d'un composant du dispositif, tel qu'une vis.

Ces objectifs, ainsi que d'autres qui apparaîtront par la suite, sont atteints à l'aide d'un dispositif de fixation étanche, par vissage, d'une pièce dans une gouge ménagée sur la carrosserie d'un véhicule automobile. Selon l'invention, ce dispositif comprend une plaque métallique fine et une épaisseur de mousse, susceptibles de suivre une courbure du fond de ladite gouge, de façon à assurer une bonne étanchéité lorsque ladite pièce est vissée dans ladite gouge.

Ainsi, contrairement aux techniques antérieures, on utilise une plaque suffisamment fine pour être souple, ce que cherche à éviter les dispositifs de l'art antérieur. L'ajout d'une mousse compense la faible épaisseur de la plaque, et permet cependant d'obtenir une très bonne étanchéité.

La souplesse de la plaque, et de la mousse, permet de suivre les bords de gouge, même lorsqu'ils ne sont pas plan, et donc de dimensionner efficacement la palque.

De façon avantageuse, le dispositif comprend également un joint d'étanchéité placé entre ladite pièce et ladite plaque métallique. Il peut notamment s'agir d'un joint EPDM.

Ce joint permet d'assurer l'étanchéité autour de la vis, et entre la pièce à fixer et la plaque.

Préférentiellement, ledit joint est serré sur une vis de fixation traversant ladite pièce. Cela permet de fournir le dispositif sous la forme d'un ensemble, dont tous les éléments sont embarqués.

De façon avantageuse, ledit joint est conçu pour embarquer une vis, avec une cote de dépassement sous ladite pièce stable dans le temps dans une plage prédéterminée.

Ainsi, les vis ne risquent pas de détériorer, par exemple, la peinture du pavillon sur lequel le dispositif serait posé.

Selon un mode de réalisation préférentiel, ladite mousse est une mousse à faible résistance à la compression, et par exemple une mousse à cellules semi-fermées.

Ladite mousse peut notamment être solidarisée à ladite plaque métallique par collage, par exemple à l'aide d'un adhésif double.

Selon un aspect particulier de l'invention, ladite pièce présente un oblong, dans lequel une vis peut coulisser, en entraînant ledit dispositif. Cela permet de prendre en compte les dispersions du véhicule.

Selon un premier mode de réalisation de l'invention, ladite pièce présente deux gaudrons venant prendre appui sur ladite plaque, et entre lesquels est placé ledit joint.

Selon un second mode de réalisation, le dispositif comprend une cale placée entre ladite plaque et ledit joint, et présentant deux extensions d'extrémité formant support de ladite pièce.

Le dispositif de l'invention peut être utilisé pour différents types de pièces devant être solidarisées à une gouge de la carrosserie d'un véhicule. Il peut notamment s'agir d'un longeron. Celui-ci peut par exemple être prévu pour coopérer avec au moins une barre de galerie.

L'invention concerne donc, également ces pièces équipées d'au moins un tel dispositif (ou prévu pour coopérer avec au moins un tel dispositif). De façon non limitative, l'invention concerne ainsi un longeron destiné à être monté dans une gouge ménagée sur la carrosserie d'un véhicule automobile. Selon l'invention, on rapporte, sous le corps dudit longeron, au niveau de chaque emplacement de vissage dudit longeron dans ladite gouge, un dispositif de fixation comprenant une plaque métallique fine et une épaisseur de mousse, susceptibles de suivre une courbure du fond de ladite gouge, de façon à assurer une bonne étanchéité lorsque ledit longeron est vissé dans ladite gouge.

L'invention concerner également les véhicules automobiles comprenant au moins un tel dispositif de fixation et/ou au moins un tel longeron.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 est une vue en coupe d'un longeron selon un mode de réalisation de l'invention, avant son montage sur le pavillon d'un véhicule ;
- la figure 2 est une vue de coupe du longeron de la figure 1, une fois montée ;
- la figure 3 est une vue de dessus du longeron de la figure 2 ;
- la figure 4 présente, en coupe, une variante du système des figures 1 et 2, comprenant une cale.

Comme déjà mentionné, l'invention propose un système de fixation d'une pièce dans une gouge d'une carrosserie. Le mode de réalisation décrit ci-après concerne un dispositif de fixation sous longeron, notamment pour galerie de pavillon, qui permet d'étancher de façon efficace et simple des trous de pavillon ayant un diamètre important, et ce malgré la proximité des rayons de fond de gouge. Bien sur, l'invention peut être adaptée aisément à d'autres pièces q'un longeron.

Ce système de fixation équipe donc le longeron (ou corps de longeron) à chaque emplacement de vis.

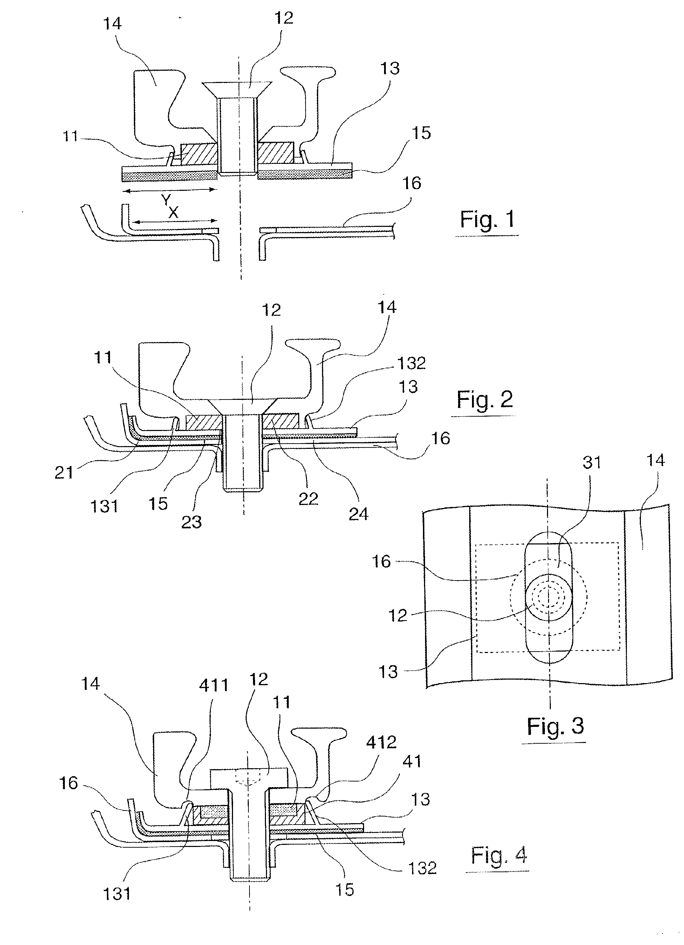

Ainsi que cela est illustré en figure 1, qui présente un mode de réalisation de l'invention, le système comprend un joint 11, par exemple en matière plastique souple ou caoutchouc, de type EPDM. Celui-ci est serré sur le diamètre intérieur de la vis de fixation 12.

De cette façon, la vis 12 est embarquée avec le système, et positionnée de façon qu'elle ne puisse pas rayer la carrosserie. Le monteur n'a donc pas à mettre en place et à pré-positionner la vis.

Le système comprend également une plaque métallique 13, d'épaisseur relativement fine, de quelques dixièmes de millimètres, par exemple 4 mm, cette épaisseur étant choisie de façon que la plaque ne soit pas complètement rigide. Il est à noter que cette approche tout à fait nouvelle va à l'encontre des a priori de l'homme du métier, qui cherche à obtenir des contacts rigides, pour garantir une bonne tenue de couple de serrage.

Cette plaque métallique 13 est disposée sous le longeron 14. Elle reçoit, par exemple par collage, une mousse 15, fortement compressible. Il peut par exemple, s'agir d'une mousse à cellules semi-fermées. Ce collage peut par exemple être effectué à l'aide d'un adhésif double face, rapporté sur la mousse. L'ensemble mousse + adhésif est ensuite rapporté sur la plaque.

La plaque 13 présente un trou pour le passage de la vis 12, dont le diamètre est très légèrement supérieur à celui de cette vis.

On notera que la demie-largeur Y de la plaque 13, et de la mousse 15, est supérieure à la demie-largeur plane X du fond de gouge 16, ce qui serait tout à fait impossible selon l'art antérieur, dans lequel la plaque métallique est rigide.

Une fois montée, c'est-à-dire lorsque la vis 12 est serrée, la plaque 13 et la mousse 15 épousent (21), selon l'invention, le rayon de fond de gouge, ainsi que cela est illustré en figure 2.

Plus précisément, lors du serrage sur le pavillon, on obtient les résultats suivants :
- le joint d'étanchéité 11 se comprime d'une valeur prédéterminée, par exemple 0,5 mm. Il assure ainsi une étanchéité 22 entre le longeron 14 et la plaque métallique 13, et une étanchéité 23 autour de la vis 12 ;
- la mousse 15 se comprime jusqu'à atteindre une épaisseur suffisante pour assurer l'étanchéité 24 entre le pavillon 16 et le longeron 14.

Comme mentionné plus haut, si le rayon de gouge est proche du trou du pavillon (distance X faible), la plaque métallique 13, du fait de sa faible épaisseur, suit, avec la mousse 15, la forme du galbe lors du serrage. L'étanchéité est donc assurée de façon efficace, malgré ce galbe.

Par ailleurs, la technique de l'invention permet de limiter les problèmes de tenue de couple de serrage. En effet, l'effort de serrage passe systématiquement par des contacts rigides
- le contact tête de vis/longeron est un contact métallique ;
- le contact longeron/plaque métallique est également un contact métallique ;
- le contact plaque métallique/pavillon (fond de gouge) est un contact assuré par l'intermédiaire d'une mousse à cellules semi-fermées, ayant la caractéristique d'offrir une faible résistance à la compression.

Ce contact peut donc être considéré, en pratique, comme étant un contact rigide.

La figure 3 est une vue de dessus de la figure 2, sur laquelle on peut noter que le longeron 14 présente un oblong 31, qui permet un déplacement de réglage de la vis, selon l'axe du longeron, pour tenir compte des dispersions du véhicule.

Le système de l'invention, mobile en translation lorsque la vis 12 est déplacée dans l'oblong 31, conserve une étanchéité complète, malgré la présence de cet oblong.

Sur la figure 2, on note que le longeron 14 présente deux gaudrons 141 et 142, qui viennent prendre appui sur la plaque métallique 13. Le joint 11 est logé entre ces deux gaudrons 141 et 142.

La plaque métallique 13 présente quant à elle deux extensions 131 et 132, prévues pour venir le long des gaudrons 141, et 142, pour solidariser cette plaque 13 au corps de longeron 14.

Dans certains cas, il n'est prévu, ou pas possible de prévoir, des gaudrons. Il n'est pas non plus envisageable de réaliser un contact parfait de l'intégralité des surfaces du longeron et du fond de gouge. On introduit alors, selon l'invention et ainsi que cela est illustré en figure 4, une cale 41, entre la plaque métallique 13 et le joint 11.

Cette cale 41 présente deux bords 411 et 412 qui s'étendent vers le longeron 14, et supportent celui-ci. Ils définissent également le logement pour le joint 11.

La plaque métallique 13 comprend toujours des extensions 131, 132 de solidarisation avec le longeron 14. L'absence de gaudrons est compensée, pour cette solidarisation, par des logements 143 et 144, recevant les extrémités des deux extensions 131 et 132.

## Revendications

1. Dispositif de fixation étanche, par vissage, d'une pièce dans une gouge ménagée sur la carrosserie d'un véhicule automobile,
**caractérisé en ce qu'**il comprend une plaque métallique fine et une épaisseur de mousse, susceptibles de suivre une courbure du fond de ladite gouge,
de façon à assurer une bonne étanchéité lorsque ladite pièce est vissée dans ladite gouge.

2. Dispositif de fixation selon la revendication 1, **caractérisé en ce qu'**il comprend un joint d'étanchéité placé entre ladite pièce et ladite plaque métallique.

3. Dispositif selon la revendication 2, **caractérisé en ce que** ledit joint est un joint EPDM.

4. Dispositif selon l'une quelconque des revendications 2 et 3, **caractérisé en ce que** ledit joint est serré sur une vis de fixation traversant ladite pièce.

5. Dispositif selon la revendication 4, **caractérisé en ce que** ledit joint est conçu pour embarquer une vis, avec une cote de dépassement sous ladite pièce stable dans le temps dans une plage prédéterminée.

6. Dispositif selon l'une quelconque des revendications 1 à 5, **caractérisé en ce que** ladite mousse est une mousse à faible résistance à la compression.

7. Dispositif selon la revendication 6, **caractérisé en ce que** ladite mousse est une mousse à cellules semi-fermées.

8. Dispositif selon l'une quelconque des revendications 1 à 7, **caractérisé en ce que** ladite mousse est solidarisée à ladite plaque métallique par collage.

9. Dispositif selon l'une quelconque des revendications 1 à 8, **caractérisé en ce que** ladite pièce présente un oblong, dans lequel une vis peut coulisser, en entraînant ledit dispositif.

10. Dispositif selon l'une quelconque des revendications 2 à 9, **caractérisé en ce que** ladite pièce présente deux gaudrons venant prendre appui sur ladite plaque, et entre lesquels est placé ledit joint.

11. Dispositif selon l'une quelconque des revendications 2 à 9, **caractérisé en ce qu'**il comprend une cale placée entre ladite plaque et ledit joint, et présentant deux extensions d'extrémité formant support de ladite pièce.

12. Dispositif selon l'une quelconque des revendications des revendications 1 à 11, **caractérisé en ce que** ladite pièce est un longeron.

13. Dispositif selon la revendication 12, **caractérisé en ce que** ledit longeron est prévu pour coopérer avec au moins une barre de galerie.

14. Longeron destiné à être monté dans une gouge ménagée sur la carrosserie d'un véhicule automobile,
**caractérisé en ce qu'**on rapporte, sous le corps dudit longeron, au niveau de chaque emplacement de vissage dudit longeron dans ladite gouge, un dispositif de fixation comprenant une plaque métallique fine et une épaisseur de mousse, susceptibles de suivre une courbure du fond de ladite gouge,
de façon à assurer une bonne étanchéité lorsque ledit longeron est vissé dans ladite gouge.

15. Véhicule automobile comprenant au moins un dispositif de fixation selon l'une quelconque des revendications 1 à 13 et/ou au moins un longeron selon la revendication 14.
